# EUROPÄISCHE PATENTSCHRIFT

(11) **EP 1 993 724 B1**
(45) Veröffentlichungstag und Bekanntmachung des Hinweises auf die Patenterteilung: **18.04.2012**
(21) Anmeldenummer: 07712334.7
(22) Anmeldetag: 27.02.2007
(51) Int. Cl.: B01J 20/26, C08G 18/64, C08J 9/00

(54) **POLYURETHANSCHAUMSTOFFE**
POLYURETHANE FOAMED MATERIALS
MOUSSES DE POLYURÉTHANNE

(30) Priorität: 06.03.2006 EP 06110705
(43) Veröffentlichungstag der Anmeldung: 26.11.2008
(73) Patentinhaber: BASF SE, 67056 Ludwigshafen (DE); Recticel N.V., 1140 Brussels (BE)
(72) Erfinder: ARLT, Andreas, 73728 Esslingen (DE); KLEMM, Michael, 49448 Lemförde (DE); SIEMENSMEYER, Karl, 67227 Frankenthal (DE); BECKER, Heike, 68163 Mannheim (DE); STEIN, Stefan, 55286 Wörrstadt (DE); GUZMANN, Marcus, 69242 Mühlhausen (DE); SOMOGYI, Laszlo, 67117 Limburgerhof (DE)
(74) Vertreter: Schweers, Olaf
(86) Internationale Anmeldenummer: PCT/EP2007/051845
(87) Internationale Veröffentlichungsnummer: WO 2007/101803

(56) Entgegenhaltungen:
- EP-A1- 0 473 026
- WO-A-01/55242
- US-A- 3 753 756

## Beschreibung

Die Erfindung betrifft Polyurethanschaumstoffe, bevorzugt hydrophile Schaumstoffe, enthaltend mindestens ein adsorbierendes Mittel(i), deren Verwendung und Verfahren zu ihrer Herstellung. Im folgenden können die adsorbierenden Mittel auch als Komplexbildner bezeichnet werden.

Die Herstellung von Polyurethanschaumstoffen, im folgenden auch als PUR-Schaumstoffe bezeichnet, durch Umsetzung von Polyisocyanaten mit Verbindungen mit mindestens zwei reaktiven Wasserstoffatomen ist seit langem bekannt und wurde vielfach beschrieben.

Aufgrund der vorteilhaften Eigenschaften von PUR-Schaumstoffen, beispielsweise hinsichtlich ihres geringen Abriebs und ihrer Chemikalienbeständigkeit, eignen sich diese Schaumstoffe prinzipiell hervorragend als Trägermaterialien für Wirkstoffe. Die Trägerung von Adsorbentien auf Polymeren bietet sowohl für physikalische als auch chemische Prozesse gegenüber ungeträgerten Verfahren Vorteile. Dazu gehören beispielsweise die leichte Entfernung und Rückgewinnung von Verbindungen, z.B. durch einfache Filtration oder Regeneration, das Recycling und die Möglichkeit zur Verwendung in kontinuierlichen Flussverfahren sowie die hohe Wirksamkeit, bedingt durch die große Oberfläche des Trägermaterials. Häufig werden als geträgerte Wirkstoffe Komplexbildner verwendet.

In WO 95/18159 werden Ionenaustauscherharze zur Abtrennung von Silber und Gold beschrieben, die aus einem Polyurethan als Matrix und einem darin dispergierten zweiten Polymer, das Aminfunktionalitäten enthält, bestehen. Als zweites Polymer können bekannte Polymerisate verwendet werden. Die Herstellung der Ionenaustauscherharze kann erfolgen, indem man den Ausgangskomponenten des Polyurethans ein Polymer, das keine Aminfunktionalitäten enthält, zusetzt und nach der Polyurethanbildung durch chemische Modifizierung des zweiten Polymers die Aminfunktionalitäten aufbringt. In einer anderen Ausführungsform wird das Polyurethan mit den Monomeren des zweiten Polymers getränkt und danach durch Polymerisation das zweite Polymer hergestellt. Hierbei können die Monomere bereits Aminfunktionalitäten enthalten, es ist jedoch auch möglich, diese durch nachträgliche chemische Modifizierung aufzubringen. Diese Ionenaustauscherharze sind schwierig herzustellen.

In WO 01/55242 werden Polyurethanschaumstoffe beschrieben, die Polyethylenimine und Polyvinylamin-Copolymere als Kompexbildner enthalten und als Adsorbentien für Schwermetallionen und Farbstoffe eingesetzt werden können. Nachteilig ist, dass die verwendeten Komplexbildner relativ niedermolekular sind, was zu einer negativen Beeinflussung der mechanischen Eigenschaften der Schaumstoffe während der Trägerung der Schaumstoffe im Imprägnierverfahren führt, da die eingesetzten Komplexbildner unter den Bedingungen der Thermofixierung bei erhöhter Temperatur als Lösemittel auf den Schaumstoff wirken. Ein weiterer Nachteil ist, dass eine direkte Mitverschäumung der genannten Komplexbildner, die in WO 01/55242 zwar vorgeschlagen wird, aufgrund ihrer hohen Aminfunktionalität und damit Reaktivität nur schwer möglich ist. Die Mitverschäumung der genannten Komplexbildner führt deswegen entweder zu starker Geschlossenzelligkeit und dadurch zum Schrumpf der Schaumstoffe oder aber zu deren Kollaps.

Die Aufgabe der vorliegenden Erfindung war es demnach, Komplexbildner zu finden, die keinen negative Einfluss auf die Schaumstoffeigenschaften haben. Insbesondere sollten Komplexbildner gefunden werden, die möglichst durch einfache Verfahren, beispielsweise durch Mitverschäumung, auf dem Schaumstoff fixiert werden können. Falls Tränkverfahren notwendig sein sollten, sollten die Komplexbildner möglichst geringen Einfluss auf die mechanischen Eigenschaften des Schaumstoffes haben.

Die Aufgabe der vorliegenden Erfindung konnte durch Polyurethanschaumstoffe gelöst werden, die adsorbierende Mittel enthalten.

Gegenstand der Erfindung sind demzufolge Polyurethanschaumstoffe, dadurch gekennzeichnet, dass sie adsorbierende Mittel (i) ausgewählt aus der Gruppe, enthaltend Vinylimidazol-Homopolymere, Vinylpyrrolidon-Homopolymere, Polyvinylpyrrolidon, modifiziertes Polyvinylpyrrolidin, Polyvinylimidazol, modifiziertes Polyvinylimidazol, Copolymere aus Vinylpyrrolidon mit Vinylimidazol, Copolymere aus Vinylpyrrolidon mit Vinylacetat, Copolymere aus Vinylpyrrolidon mit Vinylformamid, mit olefinisch ungesättigten Carbonsäuren modifizierte Polyetheylenimine, mit Alkylenoxiden umgesetzte Polyetheylenimine und mit Amidgruppen modifizierte Polyethylenimine enthalten und dass die Matrix der Polyurethanschaumstoffe Acrylatgruppen enthält.

Gegenstand der Erfindung ist weiterhin die Herstellung dieser Polyurethanschaumstoffe.

Gegenstand der Erfindung ist weiterhin die Verwendung dieser Polyurethanschaumstoffe zur Abtrennung von Metallionen und von organischen Verbindungen aus Flüssigkeiten.

Als adsorbierende Mittel (i) werden vorzugsweise Polymerisate aus N-Vinylmonomeren und/oder Aziridinen eingesetzt. Bevorzugte Beispiele für Verbindungen (i) sind Homopolymerisate aus Vinlyimidazol und Vinylpyrrolidon, modifizierte Polymerisate aus Vinylpyrrolidon, Copolymere aus Vinylpyrrolidon mit Vinylimidazol, Copolymere aus Vinylpyrrolidon mit Vinylacetat, Copolymere aus Vinylpyrrolidon mit Vinylformamid sowie modifizierte Polyethylenimine.

Beispielsweise kommen in Betracht: Vinylpyrrolidon-Homopolymere mit einem Molekulargewichtsbereich (k-Wert) von 10,0 - 200,0; Copolymere aus Vinylpyrrolidon mit Vinylimidazol mit einem Molekulargewichtsbereich (k-Wert nach Fikentscher) von 10,0 -100,0, Copolymere aus Vinylpyrrolidon mit Vinylacetat mit einem Molekulargewichtsbereich (k-Wert) von 10,0 - 100,0; Copolymere aus Vinylpyrrolidon mit Vinylformamid mit einem Molekulargewichtsbereich (k-Wert) von 10,0 100,0; Copolymere aus Vinylpyrrolidon mit Vinylcaprolactam mit einem Molekulargewichtsbereich (k-Wert) von 10,0 - 100,0; vernetzte und damit unlösliche Vinylpyrrolidon-Homopolymere, vernetzte und damit unlösliche Copolymere aus Vinylpyrrolidon mit Vinylimidazol; modifizierte Polyethylenimine in einem Molekulargewichtsbereich von 100 - 3.000.000 g/mol, wobei das Polyethyleinimin modifiziert sein kann mit olefinisch ungesättigten Carbonsäuren wie beispielweise Maleinsäure oder Acrylsäure, oder durch Alkoxylierung, wobei als Alkylenoxide Ethylenoxid, Propylenoxid und/oder Butylenoxid eingesetzt werden. Zusätzlich können auch Polyethylenimine eingesetzt werden, die zusätzlich zu den Aminogruppen Amidgruppen im Polymer enthalten. Derartige Verbindungen werden auch als Polyamidoamine bezeichnet. Die zur Herstellung der erfindungsgemäßen Schaumstoffe eingesetzten Hompolymere aus Vinylpyrrolidon und Copolymere aus Vinylpyrrolidon mit Vinylimidazol wurden von B. Fussnegger in Food Technology International Europe 1995, Seite 158 - 163 als adsorbierende Mittel für Schwermetallionen und Polyphenolen in Wein und Bier beschrieben.

In einer besonderen Ausführungsform der erfindungsgemäßen Polyurethane lassen sich feste und damit unlösliche Komplexe aus den beschriebenen Polymeren (i), die Jod und/oder Wasserstoffperoxid gebunden enthalten, einsetzen. Schaumstoffe, die mit derartigen Komplexen, wie sie z. B. in WO 97/20867 oder EP 0473026 beschrieben werden, beladen sind, lassen sich beispielsweise als desinfizierende Filter in Klimaanlagen, insbesondere in Krankenhäusern und öffentlichen Gebäuden einsetzen. Eine weitere Anwendungsmöglichkeit von Schaumstoffen, die Komplexe aus Vinylpyrrolidon-Homopolymeren und Wasserstoffperoxid tragen, ist deren Verwendung als Schwamm zur Entfernung von Flecken auf Textilien, wie Kleidungsstücken und Teppichen im Haushaltsbereich. Insbesondere Flecken von Obst, Wein und Körperflüssigkeiten wie Blut lassen sich mit derartigen Schwämmen durch einfaches Abstreifen auf dem zu reinigenden Textil entfernen.

Im Gegensatz zu den Polyethyleniminen, wie sie beispielweise in WO 01/55242 beschrieben werden, lassen sich die erfindungsgemäß eingesetzten modifizierten Polyethylenimine wesentlich leichter als Reaktivkomponente bei der Polyadditionsreaktion mitverschäumen. Durch die chemische Modifizierung werden reaktive Aminogruppen, insbesondere primäre Aminogruppen im Polyethylenmolekül mit Alkylenoxiden oder olefinisch ungesättigten Carbonsäuren umgesetzt. Der Anteil an reaktiven Aminogruppen wird dadurch reduziert und die Reaktivität gegenüber Isocyanaten herabgesetzt, wodurch sie sich ohne Probleme als Reaktivkomponente verschäumen lassen.

Die Adsorptionsfähigkeit für einzelne Substanzen wird durch das geträgerte adsorbierende Mittel (i) gesteuert. Wesentlich ist auch die Oberfläche des Trägermaterials. Daher haben sich als Trägermaterialien Polyurethanschaumstoffe als besonders geeignet erwiesen.

Die adsorbierenden Mittel (i) können durch verschiedene Verfahren auf dem Polyurethanschaumstoff geträgert werden.

Zum einen kann die Herstellung des Polyurethanschaumstoffs durch Umsetzung von Polyisocyanaten mit Verbindungen mit mindestens zwei mit Isocyanaten reaktiven Wasserstoffatomen in Gegenwart von (i) durchführt werden. Aus den adsorbierenden Mitteln (i), insbesondere den Poylethyleniminen, die mit Isocyanatgruppen reaktive Wasserstoffatome enthalten, können auch durch Reaktion mit Isocyanat Prepolymere hergestellt werden. Unter Prepolymeren versteht man Umsetzungsprodukte der Komplexbildner mit Polyisocyanaten, die am Kettenende freie Isocyanatgruppen aufweisen. Prepolymeren und ihre Herstellung sind allgemein bekannt und vielfach beschrieben.

Insbesondere die vernetzten und damit unlöslichen Vinylpyrrolidon-Homopolymere, und die vernetzten und damit unlöslichen Copolymere aus Vinylpyrrolidon mit Vinylimidazol und/oder Vinylformamid und/oder Vinylacetat können in dieser Ausführungsform als rieselfähiges Pulver vorteilhaft in der Polyolkomponente dispergiert werden.

In einer anderen Ausführungsform kann man den Polyurethanschaumstoff nach seiner Herstellung mit dem adsorbierenden Mittel (i) tränken. Durch das Tränken des Schaumstoffes mit dem flüssigen adsorbierenden Mittel (i) bzw. einer Lösung des festen oder flüssigen adsorbierenden Mittels (i) in einem geeigneten Lösemittel wird das adsorbierende Mittel (i) auf dem Schaumstoff imprägniert. Als Lösemittel eignen sich protische Lösemittel, beispielsweise Wasser, Aceton, i-Propanol oder Methylethylketon. Aus den mit adsorbierendem Mittel (i) getränkten Schaumstoffen kann anschließend das Lösemittel entfernt werden. Dies kann geschehen durch einfaches Anlegen eines Vakuums oder durch Trocknen bei Temperaturen von vorzugsweise bis max. 50°C. Durch eine anschließende Temperaturbehandlung bei Temperaturen zwischen 20 und 150°C über einen Zeitraum von 0,5 bis 72 Stunden können die adsorbierenden Mittel (i) auf den Schaumstoff aufreagieren und damit kovalent angebunden werden.

In einer bevorzugten Ausführungsform wird das Tränken des Schaumstoffes mit dem flüssigen adsorbierenden Mittel (i) bzw. einer Lösung des festen oder flüssigen adsorbierenden Mittels in einem geeigneten Lösemittel auf dem Schaumstoff bei erhöhter Temperatur durchgeführt. Geeignete Temperaturen hierfür liegen zwischen 30 und 70°C.

Zu einer besseren Fixierung des adsorbierenden Mittels (i) ist die Matrix des Schaumstoffs mit geeigneten Acrylatgruppen versehen, mit denen das adsorbierende Mittel bevorzugt reagieren kann. Als Acrylatgruppen tragende Verbindungen können z.B. alpha, beta-ungesättigte Carbonylverbindungen, wie beispielsweise monofunktionelle Hydroxyalkylacrylate, bevorzugt Hydroxybutylacrylat oder difunktionelle Epoxyacrylate eingesetzt werden. Insbesondre erlaubt die Verwendung der Ankergruppen eine Reduzierung der Temperatur bei der Thermofixierung, was sich wiederum positiv auf die mechanischen Eigenschaften, insbesondere die Dehnung und Weiterreißfestigkeit der imprägnierten Schaumstoffe auswirkt.

Die Thermofixierung des adsorbierenden Mittels lässt sich in einer bevorzugten Ausführungsform durch den Zusatz von basischen Katalysatoren, wie beispielsweise tertiären Aminen und/oder Amidinen und oder Alkalihydroxiden verbessern. Als tertiäre Amine seien beispielhaft genannt Diazabicyclooctan und N-Dimethylmorpholin. Als Amidine seien beispielhaft genannt Tetramethylguanidin und Diazabicycloundecen. Diese Katalysatoren können der Lösung des adsorbierenden Mittels in Gewichtsanteilen von 0,01 - 2,0 Gew.-%, bevorzugt 0,75 -.1,25 Gew.-%, zugegeben werden und lassen sich beim Tränkverfahren mit anschließender Thermofixierung der als Verbindung (i) eingesetzten Polyethylenimine mit einem sehr hohen Molekulargewicht von > 700.000 g/mol, insbesondere > 1.500.000 einsetzen. Durch das hohe Molekurgewicht wirken die Poylyethylenimine unter dem Einfluss der relativ hohen Temperaturen während der Thermofixierung nicht als Lösemittel, so dass die Schaumstoffe weitgehend ihre ursprünglichen mechanischen Eigenschaften behalten. Dies ist vorteilhaft gegenüber Polyethyleniminen mit geringem Molekulargewicht, wie sie z.B. in WO 01/55242 beschrieben werden.

Der Schaumstoff kann auch vorab mit einer verdünnten Isocyanatlösung getränkt werden. Der so präparierte Schaumstoff wird anschließend mit der Lösung des adsorbierenden Mittels getränkt. Auch hier kann das adsorbierende Mittel über die Isocyanatgruppen auf dem Schaum gebunden werden.

Bei einer nachträglichen Tränkung der Schaumstoffe mit einer Lösung des adsorbierenden Mittels ist die Aufnahmekapazität des Schaumstoffes auch von der Art und Polarität des Lösemittels abhängig, in dem der Wirkstoff gelöst wurde. Speziell die Verwendung von Aceton als bevorzugtem Lösungsmittel für die Verbindung (i) erhöht die Kapazität des Schaumstoffes für (i).

Die durch Tränken auf den Schaumstoff aufgebrachten adsorbierenden Mittel (i) können gegebenenfalls in einem weiteren Schritt auf dem Schaumstoff vernetzt werden. Als Vernetzer sind beispielsweise nichtflüchtige PEG-bisglycidylether oder Polycarbonsäuren geeignet. Die zur Vernetzung benötigten Temperaturen liegen für die Ether bei 80°C und für die Polycarbonsäuren bei 120 bis 130°C.

In einer besonders bevorzugten Ausführungsform wird eine Kombination der beiden beschriebenen Verfahren eingesetzt. In einem ersten Schritt wird dabei das adsorbierende Mittel (i), insbesondre ein vernetztes und damit unlösliches Vinylpyrrolidon-Homopolymer und/oder ein vernetztes und damit unlösliches Copolymer aus Vinylpyrrolidon mit Vinylimidazol in der Polyolkomponente dispergiert und mit dieser anschließend die Polyadditionsreaktion durchgeführt. In einem zweiten Schritt wird der so hergestellte Schaumstoff, der das zu adsorbierende Mittel (i) eingeschäumt enthält, mit einer Lösung des adsorbierenden Mittels (i), insbesondere einer wässrigen Lösung eines erfindungsgemäßen Polyethylenimins getränkt und (i) anschließend durch Thermofixierung (i) auf dem Schaumstoff kovalent fixiert. Durch die Kombination beider Verfahren lässt sich die maximale Adsorptionskapazität der erfindungsgemäßen Schaumstoff erhöhen. Insbesondere lassen sich durch die Verwendung unterschiedlicher Klassen der adsorbierenden Mittel (i) verschiedene zu adsorbierende Verbindungen mit dem gleichen Schaumstoff in einem Schritt binden.

Die erfindungsgemäßen Polyurethanschaumstoffe weisen bevorzugt einen Gehalt an adsorbierendem Mittel (i) von 0,1 bis 100 Gew.-%, bezogen auf das Gewicht des Polyurethans, auf.

Die erfindungsgemäßen Polyurethanschaumstoffe finden bevorzugt Anwendung bei der Adsorption von Farbstoffen, organischen Verbindungen wie z.B. Polyphenolen, sauren Gasen sowie von Schwermetall-Ionen aus wässrigen oder gasförmigen Medien.

Mit den erfindungsgemäßen Schaumstoffen können insbesondere synthetische oder natürliche anionische Farbstoffe, wie. z.B. anionisch modifizierte Azo-, Triarylmethan-, Anthrachinon-, Nitro-, Pyrazolon-, Chinolin-, Naphthol- u. Azin-Farbstoffe adsorbiert werden. Die erfindungsgemäßen Schaumstoffe haben eine bevorzugte Bindefähigkeit für Direkt- und Reaktivfarbstoffe sowie Dispersionsfarbstoffe und können diese beispielsweise aus Prozess- und Abwässern adsorbieren. Insbesondere hydrolysierte Reaktivfarbstoffe, die im Abwasser bei der Reaktivfärberei anfallen, können durch die erfindungsgemäßen Schaumstoffe gebunden werden. Die erfindungsgemäßen Schaumstoffe lassen sich zum Aufkonzentrieren von Prozesswässern in der Textil-und Lederfärbung einsetzen. Die Farbstoffe bzw. hydrolysierten Farbstoffe werden dabei so fest an den Schaumstoff gebunden, dass sie selbst unter Zugabe von Wasser nicht mehr vom Schaumstoff gelöst werden können. Die mit Farbstoff beladenen Schaumstoffe lassen sich jedoch durch Zusatz bestimmter Chemikalien wieder regenerieren, d.h. der gebundene Farbstoff lässt sich durch Zusatz von oxidierend bzw. reduzierend wirkenden Chemikalien wieder vom Schaumstoff ablösen. Geeignete Reduktionsmittel stellen beispielweise wässrige Natriumdithionitlösungen im alkalischen pH-Bereich (Zusatz von Natriumcarbonat) dar. Geeignete Oxidationsmittel sind z.B. wässrige Lösungen von Wasserstoffperoxid und/oder Natriumperoxid bzw. Natriumhypochlorit. Der regenerierte und damit entfärbte Schaumstoff lässt sich danach wieder mit Farbstoff beladen.

Die Bindefähigkeit für Farbstoffe lässt sich z.B. ausnutzen, um den Übergang von Farbstoffen von einem Textil auf das andere in Wasch- und Färbevorgängen zu verhindern (Farbübertragungsinhibierung). Die erfindungsgemäßen Schaumstoffe können beispielsweise als dünnes Schwämmchen zusammen mit der Wäsche in die Waschmaschine gegeben werden oder als Filter in die Waschmaschine eingebaut werden.

Organische Verbindungen, insbesondere phenolische Verbindungen werden durch die Ausbildung von Wasserstoffbrücken oder Dipol-Dipolwechselwirkungen chemisorptiv an den erfindungsgemäßen Schaumstoffen gebunden. Die erfindungsgemäßen Schaumstoffe lassen sich beispielsweise als Filter in der Getränkeindustrie zur Entfernung von Polyphenolen und Schwermetallionen aus Wein und Bier einsetzen.

Die Metallionen, insbesondere Schwermetallionen, die durch die erfindungsgemäßen Polyurethanschaumstoffe bevorzugt adsorbiert werden können, ergeben sich aus der Wahl des geträgerten adsorbierenden Mittels. Einige Schwermetalle, besonders Quecksilber und Blei, werden auch von dem Polyurethanschaumstoff selbst adsorbiert, dadurch entsteht eine zusätzliche Verstärkung der Abreicherung. Durch die geträgerten adsorbierenden Mittel werden Ionen von insbesondere Kupfer, Nickel, Cobalt, Cadmium, Quecksilber, Blei, Chrom, Mangan, Eisen, Rhenium, Silber, Zink, besonders bevorzugt Kupfer adsorbiert.

Die erfindungsgemäßen Schaumstoffe lassen sich beispielsweise als Filter in der Aufbereitung von Prozesswässern, Abwässern und Abgasen in der metallverarbeitenden, chemischen, pharmazeutischen, Galvano- und Getränkeindustrie und als Filter in Klimaanlagen von Gebäuden und Kraftfahrzeugen und als Filter in Kraftfahrzeugen verwenden.

Als Flüssigkeiten, aus denen die genannten Verbindungen adsorbiert werden können, sind prinzipiell alle Flüssigkeiten geeignet, in denen die zu adsorbierenden Verbindungen löslich sind, und die die Polyurethanschaummatrix nicht zerstören. Insbesondere geeignet sind Wasser, gegebenenfalls polare, wassermischbare organische Lösungsmittel sowie beliebige Mischungen der genannten Verbindungen.

Bevorzugt wird die die zu adsorbierende Verbindung enthaltende Flüssigkeit oder das gasförmige Medium mit dem erfindungsgemäßen Polyurethanschaumstoff, enthaltend das adsorbierende Mittel (i), in Kontakt gebracht. Der Polyurethanschaumstoff kann dabei als geometrischer Formkörper, z.B. als Würfel oder Kugeln, oder in geflockter Form in die Flüssigkeit eingebracht, in dieser gerührt und nach der Adsorption wieder entfernt werden, beispielsweise mittels Filtration. In einer weiteren Ausführungsform der Erfindung kann der Polyurethanschaumstoff beispielsweise in einem Rohr oder einer Kartusche fixiert und die Flüssigkeit durch diesen fixierten Schaum geleitet werden. Die Fixierung des Schaums kann beispielsweise als Festbett in einer Austauschersäule erfolgen. Als günstig hat es sich erwiesen, den zerkleinerten Schaum als Filterbett anzubringen und die Austauschlösung über dieses Filter zu leiten.

Gut geeignet für das erfindungsgemäße Verfahren sind geflockte Schaumstoffe, da hier die zugängliche Oberfläche besonders hoch ist.

Nachdem sich die Adsorptionskapazität der erfindungsgemäß eingesetzten Polyurethanschaumstoffe erschöpft hat, kann gegebenenfalls durch Zusatz geeigneter Verbindungen eine Regenerierung der Schäume erreicht werden. Die Regenerierung erfolgt bei Schaumstoffen, die mit Farbstoff beladen sind, wie oben beschrieben. Bei Schaumstoffen, die mit Schwermetallionen beladen sind, erfolgt die Regeneration durch Zusatz von verdünnten Mineralsäuren, beispielsweise verdünnter Salzsäure und anschließendem Zusatz von verdünnten Alkalien, um eine Wiederbeladung der funktionellen Gruppen zu ermöglichen. Der funktionalisierte Schaumstoff kann nach der Regeneration erneut eingesetzt werden.

Ist eine Regenerierung des Schaumstoffs nicht oder nur schwer möglich, so kann dieser kostengünstig thermisch verwertet werden.

Die erfindungsgemäßen Polyurethanschaumstoffe sind vorzugsweise in einem Temperaturbereich von > 0°C bis 110°C einsetzbar, wobei bei Temperaturen > 90°C nur eine begrenzte Standzeit der Schaumstoffe zu erwarten ist.

Die erfindungsgemäßen Polyurethanschaumstoffe sind vorzugsweise offenzellig, um eine möglichst große Oberfläche für den Kontakt zwischen den adsorbierenden Mitteln (i) und der Flüssigkeit, bzw. dem gasförmigen Medium, die die zu adsorbierenden Verbindungen enthalten, zu gewährleisten. Es kann sich dabei um Weich-, Halbhart- oder Hartschaumstoffe handeln.

Weiterhin ist es vorteilhaft, die Polyurethanschaumstoffe hydrophil einzustellen. Dadurch wird eine optimale Benetzung des Schaumstoffs mit einer Flüssigkeit, welche zu adsorbierende Verbindungen enthält, ermöglicht. Die Hydrophilie der PolyurethanSchaumstoffe kann beispielsweise durch die Verwendung von Polyetherolen mit einem hohen Gehalt an Ethylenoxid in dem Polymer erhöht werden.

Die nach dem erfindungsgemäßen Verfahren hergestellten Polyurethanschaumstoffe weisen vorzugsweise eine Dichte von 10 bis 800 kg/m³, besonders bevorzugt von 20 bis 700 kg/m³ und insbesondere von 35 bis 80 kg/m³ auf.

Die Herstellung von Polyurethanschaumstoffen durch Umsetzung von Polyisocyanaten, mit Verbindungen mit mindestens zwei mit Isocyanaten reaktiven Wasserstoffatomen ist allgemein bekannt.

Zur Herstellung der erfindungsgemäßen Polyurethanschaumstoffe können die Isocyanate mit den Verbindungen mit mindestens zwei aktiven Wasserstoffatomen im Beisein von Treibmitteln sowie gegebenenfalls Katalysatoren und/oder Hilfsmitteln und/oder Zusatzstoffen zur Reaktion gebracht werden. Hierbei werden die Verbindungen mit mindestens zwei mit Isocyanatgruppen reaktiven Wasserstoffatomen sowie die genannten Treibmittel, Katalysatoren und Hilfs- und/oder Zusatzstoffe häufig vor der Umsetzung zu einer sogenannten Polyolkomponente vereinigt und diese mit dem Isocyanat zur Reaktion gebracht.

Zu den für die Durchführung des erfindungsgemäßen Verfahrens möglichen Einsatzprodukten, d.h. den Isocyanaten, den Verbindungen mit mindestens zwei aktiven Wasserstoffatomen, den Treibmitteln sowie gegebenenfalls den Katalysatoren und/oder den Hilfs- und/oder Zusatzstoffen ist im einzelnen folgendes zu sagen:
Als Isocyanate können bevorzugt Polyisocyanate, besonders bevorzugt mindestens difunktionelle Isocyanate, insbesondere die üblichen und bekannten (cyclo)aliphatischen und bevorzugt aromatischen Polyisocyanate eingesetzt werden. Beispiele für aromatische Polyisocyanate sind 2,4- und 2,6-Toluylendiisocyanat (TDI), 4,4'-, 2,4'-und 2,2'-Diphenylmethan-diisocyanat (MDI), Polyphenylen-polymethylenpolyisocyanate (Roh-MDI), 1,5-Naphthylendiisocyanat.

Beispiele für (cyclo)aliphatische Di- oder Triisocyanate sind Tetramethylendiisocyanat-1,4, Hexamethylendiisocyanat-1,6, Isophorondiisocyanat, 2-Methyl-pentamethylendiisocyanat, 2,2,4- oder 2,4,4-Trimethyl-1,6-hexamethylen-diisocyanat, 2-Butyl-2-ethylpentamethylendiisocyanat, 1,4-Diisocyanatocyclohexan, 3-Isocyanatomethyl-1-methyl-1-isocyanatocyclohexan, Isocyanatopropyl-cyclohexylisocyanat, Xylylendiisocyanat, Tetramethylxylylendiisocyanat, Bis-(4-isocyanatocyclohexyl)-methan, Lysinesterisocyanate, 1,3- oder 1,4-Bis(isocyanatomethyl)cyclohexan, 4-Isocyanatomethyl-1,8-octamethylendiisocyanat sowie deren Mischungen oder die daraus hergestellten Oligo- oder Polyisocyanate.

Die Oligo- oder Polyisocyanate lassen sich herstellen aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen.

Die genannten Isocyanate können auch modifiziert sein, beispielsweise durch Einbau von Carbodiimidgruppen. Häufig werden die Polyisocyanate auch in Form von Prepolymeren eingesetzt. Dabei handelt es sich um Umsetzungsprodukte der genannten Polyisocyanate mit Polyolkomponenten. Zumeist werden sogenannte Isocyanatprepolymere verwendet, das heißt solche Umsetzungsprodukte von Polyolen und Polyisocyanaten, die am Kettenende freie Isocyanatgruppen aufweisen. Die Prepolymeren und Quasiprepolymeren und ihre Herstellung sind allgemein bekannt und vielfach beschrieben. Für das erfindungsgemäße Verfahren werden insbesondere Prepolymere mit einem NCO-Gehalt im Bereich von 3,5 bis 25 Gew.-% eingesetzt.

In einer bevorzugten Ausführungsform des erfindungsgemäßen Verfahrens werden als Isocyanatkomponente TDI, MDI und/oder Roh-MDI eingesetzt.

Als Verbindungen mit mindestens zwei aktiven Wasserstoffatomen werden vorzugsweise Polyesteralkohole und besonders bevorzugt Polyetheralkohole mit einer Funktionalität von 2 bis 8, insbesondere von 2 bis 4, vorzugsweise 2 bis 3 und einem Molekulargewicht im Bereich von 1000 bis 8500 g/mol, vorzugsweise 1000 bis 6000 g/mol eingesetzt. Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel dienen vorzugsweise 2- und 3-funktionelle Alkohole mit Molekulargewichten kleiner 1000 g/mol, insbesondere im Bereich von 60 bis 150. Beispiele sind Ethylenglykol, Propylenglykol, Diethylenglykol, Dipropylenglykol, Polyethlenglykol mit einem Molekulargewicht kleiner 1000, Polypropylenglykol mit einem Molekulargewicht kleiner 1000 und/ oder Butandiol-1,4. Als Vernetzungsmittel können auch Diamine eingesetzt werden. Falls Kettenverlängerungs- und Vernetzungsmittel eingesetzt werden, beträgt deren Menge vorzugsweise bis zu 5 Gew.-%, bezogen auf das Gewicht der Isocyanate.

Als Katalysatoren für die Herstellung der erfindungsgemäßen Polyurethanschaumstoffe können die üblichen und bekannten Polyurethanbildungskatalysatoren eingesetzt, beispielsweise organische Zinnverbindungen, wie Zinndiacetat, Zinndioctoat, Dialkylzinndilaurat, und/oder stark basische Amine wie Triethylamin, Pentamethyldiethylentriamin, Tetramethyldiaminoethylether, 1,2-Dimethylimidazol, Dimethylcyclohexylamin, Dimethylbenzylamin oder vorzugsweise Triethylendiamin. Die Katalysatoren werden vorzugsweise in einer Menge von 0,01 bis 5 Gew.-%, vorzugsweise 0,05 bis 2 Gew.-%, bezogen auf das Gewicht der Isocyanate, eingesetzt.

Als Treibmittel zur Herstellung der Polyurethanschaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlenwasserstoffe, wie n-, iso- oder Cyclopentan, oder halogenierte Kohlenwasserstoffe, wie Tetrafluorethan, Pentafluorpropan, Heptafluorpropan, Pentafluorbutan, Hexafluorbutan, Dichlor-monofluorethan oder Acetale wie z.B. Methylal eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%, bezogen auf das Gewicht der Verbindungen mit mindestens zwei aktiven Wasserstoffatomen.

Als Hilfsmittel und/oder Zusatzstoffe können beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteriostatisch wirkende Substanzen eingesetzt werden.

Die Herstellung der Polyurethanschaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und miteinander verschäumt werden. Die Komponenten werden vorzugsweise bei einer Temperatur im Bereich zwischen 15 bis 90°C, vorzugsweise 20 bis 60°C und besonders bevorzugt 20 bis 35°C vermischt und in das Formwerkzeug, beziehungsweise auf die Bandstraße gebracht. Die Temperatur im Formwerkzeug liegt zumeist im Bereich zwischen 20 und 110°C, vorzugsweise 30 bis 60°C und besonders bevorzugt 35 bis 55°C.

Bei der direkten Zugabe des adsorbierenden Mittels (i) bereits bei der Herstellung der Polyurethanschaumstoffe kann die Komponente (i) sowohl der Polyolkomponente als auch der Isocyanatkomponente zugegeben werden. Bevorzugt wird (i) der Polyolkomponente zugegeben.

Die Erfindung soll in den nachfolgenden Beispielen näher beschrieben werden.

### Beispiel 1) Herstellung eines hydrophilen Polyurethan-Weichschaumstoffes nicht erfindungsgemäß)

Durch intensives Vermischen von 1000 g Polyol-Komponente mit 302 g IsocyanatKomponente mit Hilfe eines Rührers bei einer Drehzahl von 1250 U/min und Überführen des aufschäumenden Gemisches in ein würfelförmiges Kunststoffgefäß mit 60 l Volumen wurde ein Polyurethan-Weichschaumstoff hergestellt, wobei sich die Komponenten folgendermaßen aufbauten:
Polyol-Komponente:
   75 Teile Lupranol VP 9349^{®} (BASF Aktiengesellschaft)
   25 Teile Lupranol 2084^{®} (BASF Aktiengesellschaft)
   2,30 Teile Wasser
   0,18 Teile Lupragen N 201^{®} (BASF Aktiengesellschaft)
   0,06 Teile Lupragen N 206^{®} (BASF Aktiengesellschaft)
   1,2 Teile Dabco DC 198^{®} (Air Products)
   0,06 Teile Kosmos^{®} 29
B-Komponente:
   Toluylendiisocyanat (Lupranat^{®} T 80 A (BASF Aktiengesellschaft)

### Beispiel 2) (nicht erfindungsgemäß)

Es wurde verfahren wie in Beispiel 1, wobei die Poylol-Komponente zusätzlich 1 Gew.-Teil eines vernetzen, wasserunlöslichen Vinylpyrrolidon-Homopolymeren mit der Bezeichnung Luvicross^{®} (BASF Aktiengesellschaft) enthielt.

### Beispiel 3) (nicht erfindungsgemäß)

Es wurde verfahren wie in 1) wobei die Poylol-Komponente zusätzlich 5 Gew.-Teile eines vernetzen, wasserunlöslichen Vinylpyrrolidon-Homopolymeren mit der Bezeichnung Luvicross^{®} (BASF Aktiengesellschaft) enthielt.

### Beispiel 4) (nicht erfindungsgemäß)

Es wurde verfahren wie in 1) wobei die Poylol-Komponente zusätzlich 10 Gew.-Teile eines vernetzen, wasserunlöslichen Vinylpyrrolidon-Homopolymeren mit der Bezeichnung Luvicross^{®} (BASF Aktiengesellschaft) enthielt.

### Beispiel 5) (nicht erfindungsgemäß)

Es wurde verfahren wie in 1) wobei die Poylol-Komponente zusätzlich 1 Gew.-Teil eines vernetzen, wasserunlöslichen Copolymeren aus Vinylimidazol und Vinylpyrrolidon mit der Bezeichnung Divergan^{®} HM (BASF Aktiengesellschaft) enthielt.

### Beispiel 6) (nicht erfindungsgemäß)

Es wurde verfahren wie in 1) wobei die Poylol-Komponente zusätzlich 5 Gew.-Teile eines vernetzen, wasserunlöslichen Copolymeren aus Vinylimidazol und Vinylpyrrolidon mit der Bezeichnung Divergan® HM (BASF Aktiengesellschaft) enthielt.

### Beispiel 7) (nicht erfindungsgemäß)

Es wurde verfahren wie in 1) wobei die Poylol-Komponente zusätzlich 10 Gew.-Teile eines vernetzen, wasserunlöslichen Copolymeren aus Vinylimidazol und Vinylpyrrolidon mit der Bezeichnung Divergan^{®} HM (BASF Aktiengesellschaft) enthielt.

### Beispiel 8)

Herstellung eines hydrophilen Polyurethan-Weichschaumstoffes

Durch intensives Vermischen von 1000 g Polyol-Komponente mit 300 g IsocyanatKomponente mit Hilfe eines Rührers bei einer Drehzahl von 1250 U/min und Überführen des aufschäumenden Gemisches in ein würfelförmiges Kunststoffgefäß mit 60 l Volumen wurde ein Polyurethan-Weichschaumstoff hergestellt, wobei sich die Komponenten folgendermaßen aufbauten:
Polyol-Komponente:
   75 Teile Lupranol VP 9349^{®} (BASF Aktiengesellschaft)
   25 Teile Lupranol 2084^{®} (BASF Aktiengesellschaft)
   2,32 Teile Wasser
   2,69 Teile Butandiolmonoacrylat (BASF Aktiengesellschaft)
   0,18 Teile Lupragen N 201^{®} (BASF Aktiengesellschaft)
   0,06 Teile Lupragen N 206^{®} (BASF Aktiengesellschaft)
   1,2 Teile Dabco DC 198^{®} (Air Products)
   0,06 Teile Kosmos® 29
B-Komponente:
   Toluylendiisocyanat (Lupranat^{®} T 80 A (BASF Aktiengesellschaft)

### Beispiel 9)

Aus dem in Beispiel 8 hergestellten Schaumstoff wurde eine dünne Matte mit den Maßen 40 x 20 x 1 cm ausgeschnitten und diese mit einer 10 %- igen wässrigen Lösung eines modifizierten Polyethylenimins mit einem Molekulargewicht von 2.000.000 g/mol mit der Bezeichnung Lupasol^{®} SK getränkt. Anschließend wurde die Matte durch eine Foulard-Maschine gepresst und der Überschuß an Polyethylenimin wurde hierdurch ausgepresst bis die Matte eine Gewichtszunahme von 147 % aufwies. Anschließend wurde die Matte bei 50 °C für 5 h im Umlufttrockenschrank getrocknet, um das Wasser zu entfernen. Danach wurde die Matte bei 110 °C im Trockenschrank 16 Stunden lang einer Temperung entworfen, um das Polyethylenimin kovalent auf dem Schaumstoff anzubinden (Thermofixierung). Anschließend wurde die Matte 3 x mit Wasser gewaschen, um nicht gebundenes Polyethylenimin zu entfernen. Als letzter Schritt wurde die Matte bei 50 °C im Trockenschrank getrocknet. Der trockene Schaumstoff enthielt nach Rückwiegen 6,3 % Lupasol SK.

### Beispiel 10)

Jeweils 1 g der in den Beispielen 1) bis 9) hergestellten Schaumstoffe wurde in einem verschlossenen Chemikalienglas mit 30 g einer wässrigen Lösung von Procionblue^{®} MX-R, einem blauen Reaktivfarbstoff, 5 min lang geschüttelt, wobei die Farbstofflösung eine Konzentration von 50 mg Farbstoff/ L und eine Temperatur von 50 °C aufwies. Nach dem Schütteln wurde die Extinktion der Farbstofflösung beim Absorptionsmaximum des Farbstoffes von 600 nm bestimmt. Aus der Extinktion wurde anschließend die Konzentration des Farbstoffes in der Lösung durch Vergleich mit einer Eichgeraden unterschiedlicher Farbstoffkonzentrationen ermittelt.

In der nachfolgenden Tabelle sind die von den unterschiedlichen Schaumstoffen adsorbierten Mengen an Procionblue^{®} MX-R dargestellt.

| | Konzentration der Farbstofflösung | restliche Menge an Farbstoff in Lösung | adsorbierte Menge an Farbstoff auf dem Schaum |
|---|---|---|---|
| Referenz-Lösung Procionblue MX-R | 50,0 mg/L | 100,0% | |
| Schaum aus Beispiel 1 (Referenz) | 26,7 mg/L | 53,4% | 46,6% |
| Schaum aus Beispiel 2 | 4,5 mg/L | 8,9% | 91,1% |
| Schaum aus Beispiel 3 | 4,9 mg/L | 9,7% | 90,3% |
| Schaum aus Beispiel 4 | 4,5 mg/L | 8,9% | 91,1% |
| Schaum aus Beispiel 5 | 3,8 mg/L | 7,6% | 92,4% |
| Schaum aus Beispiel 6 | 4,2 mg/L | 8,4% | 91,6% |
| Schaum aus Beispiel 7 | 3,5 mg/L | 7,0% | 93,0% |
| Schaum aus Beispiel 9 | 8,4 mg/L | 16,9% | 83,1% |

Wie der Tabelle zu entnehmen ist, sind die verwendeten funktionalen Schaumstoffe in der Lage, einen signifikanten Anteil des Reaktivfarbstoffes durch Komplexbildung mit den Aminogruppen des Polyethylenimins und der Imidazol- bzw. Pyrrolidongruppe der zugestezten N-Vinylpolymere zu binden und dadurch zu adsorbieren. Dabei spielen sowohl ionische Wechselwirkungen als auch Wasserstoffbrückenbindungen eine entscheidende Rolle.

### Beispiel 11)

Aus dem in Beispiel 8 hergestellten Schaumstoff wurde eine dünne Matte mit den Maßen 40 x 20 x 1 cm ausgeschnitten und diese mit einer 10 %- igen wässrigen Lösung eines modifizierten Polyethylenimins mit der Bezeichnung Sokalan^{®} ES 95013 (BASF Aktiengesellschaft) getränkt. Anschließend wurde die Matte durch eine Foulard-Maschine gepresst und der Überschuß an Polyethylenimin wurde hierdurch ausgepresst bis die Matte eine Gewichtszunahme von etwa 150 % aufwies. Anschließend wurde die Matte bei 50 °C für 4 h im Umlufttrockenschrank getrocknet, um das Wasser zu entfernen. Danach wurde die Matte bei 100 °C im Trockenschrank 16 Stunden lang einer Temperung entworfen, um das Polyethylenimin kovalent auf dem Schaumstoff anzubinden (Thermofixierung). Anschließend wurde die Matte 3 x mit Wasser gewaschen, um nicht gebundenes Polyethylenimin zu entfernen. Als letzter Schritt wurde die Matte bei 50 °C im Trockenschrank getrocknet. Der trockene Schaumstoff enthielt nach Rückwiegen 14 % Sokalan^{®} ES 95013.

### Beispiel 12)

Jeweils 1 g der in den Beispielen 1), 5), 6), 7) 9) und 11) hergestellten Schaumstoffe wurde in einem verschlossenen Chemikalienglas mit 30 g einer wässrigen.Lösung von Reaktivorange 16, einem orangefarbenen Reaktivfarbstoff, 5 min lang geschüttelt, wobei die Farbstofflösung eine Konzentration von 50 mg Farbstoff/ L und eine Temperatur von 50 °C aufwies. Nach dem Schütteln wurde die Extinktion der Farbstofflösung beim Absorptionsmaximum des Farbstoffes von 490 nm bestimmt. Aus der Extinktion wurde anschließend die Konzentration des Farbstoffes in der Lösung durch Vergleich mit einer Eichgeraden unterschiedlicher Farbstoffkonzentrationen ermittelt.

In der nachfolgenden Tabelle sind die von den unterschiedlichen Schaumstoffen adsorbierten Mengen an Reaktivorange 16 dargestellt.

| | Konzentration der Farbstofflösung | restliche Menge an Farbstoff in Lösung | adsorbierte Menge an Farbstoff auf dem Schaum |
|---|---|---|---|
| Referenz-Lösung Reaktivorange 16 | 50,0 mg/L | 100,0% | |
| Schaum aus Beispiel 1 (Referenz) | 13,9 mg/L | 27,8% | 72,2% |
| Schaum aus Beispiel 5 | 2,3 mg/L | 4,5% | 95,5% |
| Schaum aus Beispiel 6 | 1,4 mg/L | 2,7% | 97,3% |
| Schaum aus Beispiel 7 | 1,2 mg/L | 2,4% | 97,6% |
| Schaum aus Beispiel 9 | 1,2mg/L | 2,4% | 97,6% |
| Schaum aus Beispiel 11 | 3,7mg/L | 7,3% | 92,7% |

Wie der Tabelle zu entnehmen ist, sind die verwendeten funktionalen Schaumstoffe in der Lage, einen signifikanten Anteil des Reaktivfarbstoffes durch Komplexbildung mit den Aminogruppen des Polyethylenimins und der Imidazol- bzw. Pyrrolidongruppe der zugestezten N-Vinylpolymere zu binden und dadurch zu adsorbieren. Dabei spielen sowohl ionische Wechselwirkungen als auch Wasserstoffbrückenbindungen eine entscheidende Rolle.

### Beispiel 13)

Herstellung eines hydrophilen Polyurethan-Weichschaumstoffes

Durch intensives Vermischen von 1000 g Polyol-Komponente mit 300 g IsocyanatKomponente mit Hilfe eines Rührers bei einer Drehzahl von 1250 U/min und Überführen des aufschäumenden Gemisches in ein würfelförmiges Kunststoffgefäß mit 60 l Volumen wurde ein Polyurethan-Weichschaumstoff hergestellt, wobei sich die Komponenten folgendermaßen aufbauten:
Polyol-Komponente:
   75 Teile Lupranol VP 9349^{®} (BASF Aktiengesellschaft)
   25 Teile Lupranol 2084^{®} (BASF Aktiengesellschaft)
   2,32 Teile Wasser
   7,00 Teile Butandiolmonoacrylat (BASF Aktiengesellschaft)
   0,18 Teile Lupragen N 201^{®} (BASF Aktiengesellschaft)
   0,06 Teile Lupragen N 206^{®} (BASF Aktiengesellschaft)
   1,2 Teile Dabco DC 198^{®} (Air Products)
   0,06 Teile Kosmos^{®} 29
B-Komponente:
   Toluylendiisocyanat (Lupranat^{®} T 80 A (BASF Aktiengesellschaft)

### Beispiel 14)

Aus dem in Beispiel 13 hergestellten Schaumstoff wurde eine dünne Matte mit den Maßen 40 x 20 x 1 cm ausgeschnitten und diese mit einer 10 %igen wässrigen Lösung eines modifizierten Polyethylenimins mit einem Molekulargewicht von ca. 750.000 g/mol mit der Bezeichnung Lupasol^{®} P getränkt. Anschließend wurde die Matte durch eine Foulard-Maschine gepresst und der Überschuß an Polyethylenimin wurde hierdurch ausgepresst bis die Matte eine Gewichtszunahme von 147 % aufwies. Anschließend wurde die Matte bei 50 °C im Trockenschrank 24 Stunden lang einer Temperung entworfen, um das Polyethylenimin kovalent auf dem Schaumstoff anzubinden (Thermofixierung). Anschließend wurde die Matte 3 x mit Wasser gewaschen, um nicht gebundenes Polyethylenimin zu entfernen. Als letzter Schritt wurde die Matte bei 50 °C im Trockenschrank getrocknet. Der trockene Schaumstoff enthielt nach Rückwiegen 3,4 % Lupasol^{®} P.

### Beispiel 15)

Jeweils 1 g der in den Beispielen) 1, 9, 11 und 14 hergestellten Schaumstoffe wurde in einem verschlossenen Chemikalienglas mit 30 g einer wässrigen Lösung von Reaktive Black^{®} 5, einem schwarzen Reaktivfarbstoff, 5 min lang geschüttelt, wobei die Farbstofflösung eine Konzentration von 50 mg Farbstoff/ L und eine Temperatur von 50°C aufwies. Nach dem Schütteln wurde die Extinktion der Farbstofflösung beim Absorptionsmaximum des Farbstoffes von 597 nm bestimmt. Aus der Extinktion wurde anschließend die Konzentration des Farbstoffes in der Lösung durch Vergleich mit einer Eichgeraden unterschiedlicher Farbstoffkonzentrationen ermittelt.

In der nachfolgenden Tabelle sind die von den unterschiedlichen Schaumstoffen adsorbierten Mengen an Reactive Black^{®} 5 dargestellt.

| | Konzentration der Farbstofflösung | restliche Menge an Farbstoff in Lösung | adsorbierte Menge an Farbstoff auf dem Schaum |
|---|---|---|---|
| Referenz-Lösung Reactive Black 5 | 50,0 mg/L | 100,0% | |
| Schaum aus Beispiel 1 (Referenz) | 48,4 mg/L | 96,9% | 3,1% |
| Schaum aus Beispiel 9 | 0,8mg/L | 1,6% | 98,4% |
| Schaum aus Beispiel 11 | 6,3mg/L | 12,6% | 87,4% |
| Schaum aus Beispiel 14 | 3,3mg/L | 6,6% | 93,4% |

Wie der Tabelle zu entnehmen ist, sind die verwendeten funktionalen Schaumstoffe in der Lage, einen signifikanten Anteil des Reaktivfarbstoffes durch Komplexbildung mit den Aminogruppen des Polyethylenimins zu binden und dadurch zu adsorbieren. Dabei spielen sowohl ionische Wechselwirkungen als auch Wasserstoffbrückenbindungen eine entscheidende Rolle.

### Beispiel 15)

260 g einer wässrigen Lösung des Reaktivfarbstoffes Reactive Black^{®} 5 mit einer Massenkonzentration von 50 mg/l wurden mit 16 g einer 0,01 N Lösung von Natriumhydroxid in Wasser versetzt und gemischt. Dieses Gemisch wurde im verschlossenen Glasgefäß bei 60 °C 60 min lang erhitzt, um die Vinylsulfongruppen im Farbstoffmolekül zu hydrolysieren. Damit sollen die bei der Färbung von Baumwolle mit Reaktivfarbstoffen ablaufenden Nebenreaktionen, die zur Bildung von hydrolysiertem Farbstoff führen, simuliert werden. Hydrolysierte Farbstoffmoleküle können nicht mehr auf dem Textil fixiert werden und fallen als Nebenprodukt in der Farbflotte an und müssen vom Textil abgewaschen werden. Die farbigen Waschwässer mit hydrolysiertem und nicht hydrolysiertem Farbstoff fallen in der Regel als Abwasser an.

### Beispiel 16)

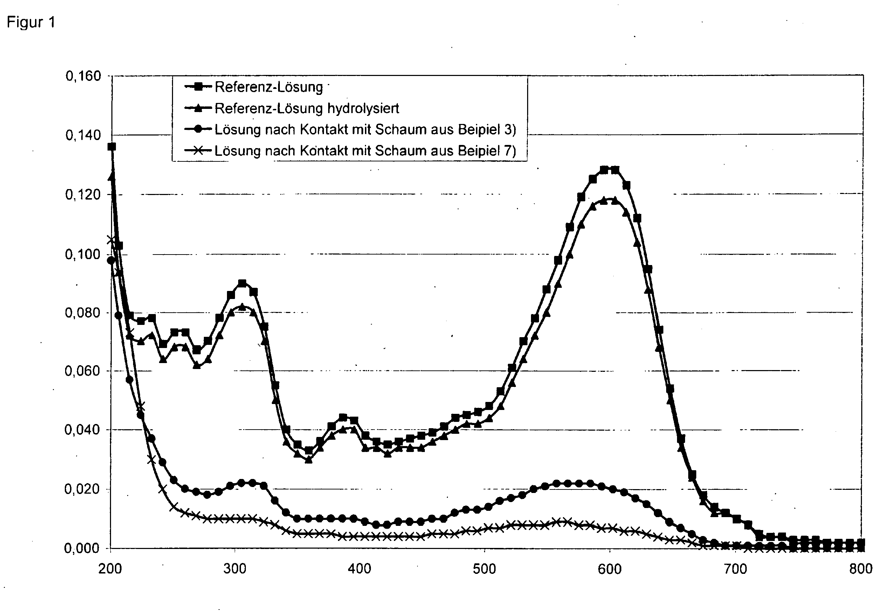

Jeweils 1 g des in Beispiel 3) hergestellten Schaumstoffes wurde in einem verschlossenen Chemikalienglas mit 30 g einer wässrigen Lösung von Reaktive Black 5 sowie in einem weiteren Versuch mit 30 g der in Beispiel 15 hergestellten Lösung des hydrolysierten Farbstoffes Reactive Black 5 min lang geschüttelt, wobei die Farbstofflösungen eine Konzentration von 50 mg Farbstoff/ L und eine Temperatur von 50°C aufwiesen. Nach dem Schütteln wurde ein UV-VIS-Spektren dieser Lösung aufgenommen und dieses mit den UV-Vis-Spektren der Referenzlösung des nicht hydrolysierten sowie des hydrolysierten Farbstoffes verglichen. In Fig. 1 ist der Vergleich der Spektren dargestellt.

Wie dem Spektrum aus Fig. 1. zu entnehmen ist, wird ein signifikanter Anteil des Farbstoffes durch den erfindungsgemäßen Schaumstoff aus Beispiel 3) gebunden, was sich in der deutlich geringeren Absorption des Farbstoffes zeigt.

### Beispiel 17)

Jeweils 1 g des in Beispiel 7) hergestellten Schaumstoffes wurde in einem verschlossenen Chemikalienglas mit 30 g einer wässrigen Lösung von Reaktive Black 5^{®} sowie in einem weiteren Versuch mit 30 g der in Beispiel 15 hergestellten Lösung des hydrolysierten Farbstoffes Reactive Black 5 min lang geschüttelt, wobei die Farbstofflösungen eine Konzentration von 50 mg Farbstoff/ L und eine Temperatur von 50°C aufwiesen. Nach dem Schütteln wurde ebenfalls ein UV-VIS-Spektren dieser Lösung aufgenommen und dieses mit den UV-Vis-Spektren der Referenzlösung des nicht hydrolysierten sowie des hydrolysierten Farbstoffes verglichen. Ein Vergleich der Spektren ist ebenfalls in Fig. 1 dargestellt. Wie dem Spektrum aus Fig 1. zu entnehmen ist, wird ein signifikanter Anteil des Farbstoffes durch den erfindungsgemäßen Schaumstoff aus Beispiel 7) gebunden, was sich in der deutlich geringeren Absorption des Farbstoffes zeigt.

### Beispiel 18)

Es wurde verfahren wie in 1) wobei die Poylol-Komponente zusätzlich 20 Gew.-Teile eines vernetzen, wasserunlöslichen Copolymeren aus Vinylimidazol und Vinylpyrrolidon mit der Bezeichnung Divergan^{®} HM (BASF Aktiengesellschaft) enthielt.

### Beispiel 19)

Jeweils 1 g des in Beispiel 18) hergestellten Schaumstoffes wurde in einem verschlossenen Chemikalienglas mit 25 ml einer wässrigen Lösung von Kupfer(II)-chlorid 20 h lang bei Raumtemperatur geschüttelt. Dabei wurde die Konzentration der Kupfer(II)-Ionen in der Kupfer(II)-chloridlösung von 5 - 200 ppm variiert. Nach dem Schütteln wurde die Lösung abfiltriert und die Konzentration an Kupfer(II)-Ionen in der Lösung mit Hilfe eines Küvetten-Schnelltests der Firma Dr.Lange mit der Bezeichnung LCK 329 und eines zugehörigen Spektralphotometers Cadas 200 der Firma Dr. Lange bestimmt. In der nachfolgenden Tabelle sind die durch den funktionalen Schaumstoff adsorberten Mengen an Cu(II)-Ionen dargestellt.

| | | | | | | | |
|---|---|---|---|---|---|---|---|
| Eingangs-Konzentration [Cu(II)] in der Lösung | ppm | 5 | 10 | 25 | 50 | 100 | 200 |
| Konzentration [Cu(II)] in der Lösung nach dem Schütteln | ppm | 0 | 0 | 0 | 2,2 | 14,3 | 57,3 |
| Adsorbierte Menge an Cu(II)/g Schaum | mg/g | 0,125 | 0,25 | 0,625 | 1,25 | 2,14 | 3,57 |

Wie der Tabelle zu entnehmen ist, ist der in Beispiel 18) hergestellte Schaumstoff in der Lage, einen signifikanten Anteil an Cu(II)-Ionen durch Komplexbildung zu binden und dadurch zu adsorbieren.

### Beispiel 20)

Es wurde verfahren wie in Beispiel 19) mit dem Unterschied, dass eine Schaummenge von 2 g des in Beispiel 18) hergestellten Schaumstoffes in einem verschlossenen Chemikalienglas mit 25 ml einer wässrigen Lösung von Kupfer(II)-chlorid 20 h lang bei Raumtemperatur geschüttelt wurde. Dabei wurde die Konzentration der Kupfer(II)-Ionen in der Kupfer(II)-chloridlösung von 50 - 200 ppm variiert. In der nachfolgenden Tabelle sind die durch den funktionalen Schaumstoff adsorbierten Mengen an Cu(II)-Ionen dargestellt.

| | | | | |
|---|---|---|---|---|
| Eingangs-Konzentration [Cu(II)] in der Lösung | ppm | 50 | 100 | 200 |
| Konzentration [Cu(II)] in der Lösung nach dem Schütteln | ppm | 0,0 | 0,3 | 5,8 |
| Adsorbierte Menge an Cu(II)/g Schaum | mg/g | 1,25 | 2,49 | 4,86 |

Wie der Tabelle zu entnehmen ist, ist der in Beispiel 18) hergestellte Schaumstoff in der Lage, einen signifikanten Anteil an Cu(II)-Ionen durch Komplexbildung zu binden und dadurch zu adsorbieren. Die erhöhte Menge an Schaumstoff führt dabei zu einer deutlich höheren Adsorptionskapazität.

### Beispiel 21)

Herstellung eines hydrophilen Polyurethan-Weichschaumstoffes

Durch intensives Vermischen von 1000 g Polyol-Komponente mit 300 g IsocyanatKomponente mit Hilfe eines Rührers bei einer Drehzahl von 1250 U/min und Überführen des aufschäumenden Gemisches in ein würfelförmiges Kunststoffgefäß mit 60 l Volumen wurde ein Polyurethan-Weichschaumstoff hergestellt, wobei sich die Komponenten folgendermaßen aufbauten:
Polyol-Komponente:
   75 Teile Lupranol VP 9349^{®} (BASF Aktiengesellschaft)
   25 Teile Lupranol 2084^{®} (BASF Aktiengesellschaft)
   2,32 Teile Wasser
   5,00 Teile Butandiolmonoacrylat (BASF Aktiengesellschaft)
   0,18 Teile Lupragen N 201^{®} (BASF Aktiengesellschaft)
   0,06 Teile Lupragen N 206^{®} (BASF Aktiengesellschaft)
   1,2 Teile Dabco DC 198^{®} (Air Products)
   0,06 Teile Kosmos^{®} 29
B-Komponente:
   Toluylendiisocyanat (Lupranat^{®} T 80 A (BASF Aktiengesellschaft)

### Beispiel 22)

Aus dem in Beispiel 21 hergestellten Schaumstoff wurde eine dünne Matte mit den Maßen 40 x 20 x 1 cm ausgeschnitten und diese mit einer 10 %- igen wässrigen Lösung eines modifizierten Polyethylenimins mit einem Molekulargewicht von ca. 2.000.000 g/mol mit der Bezeichnung Lupasol^{®} SK getränkt. Anschließend wurde die Matte durch eine Foulard-Maschine gepresst. Der Überschuss an Polyethylenimin wurde hierdurch ausgepresst bis die Matte eine Gewichtszunahme von 153 % aufwies. Anschließend wurde die Matte bei 50 °C im Trockenschrank 24 Stunden lang einer Temperung entworfen, um das Polyethylenimin kovalent auf dem Schaumstoff anzubinden (Thermofixierung). Anschließend wurde die Matte 3 x mit Wasser gewaschen, um nicht gebundenes Polyethylenimin zu entfernen. Als letzter Schritt wurde die Matte bei 50 °C im Trockenschrank getrocknet. Der trockene Schaumstoff enthielt nach Rückwiegen 1,8 % Lupasol^{®} SK.

### Beispiel 23)

Jeweils 1 g des in Beispiel 22) hergestellten Schaumstoffes wurde in einem verschlossenen Chemikalienglas mit 25 ml einer wässrigen Lösung von Kupfer(II)-chlorid 20 h lang bei Raumtemperatur geschüttelt. Dabei wurde die Konzentration der Kupfer(II)-Ionen in der Kupfer(II)-chloridlösung von 5 - 200 ppm variiert. Nach dem Schütteln wurde die Lösung abfiltriert und die Konzentration an Kupfer(II)-Ionen in der Lösung mit Hilfe eines Küvetten-Schnelltests der Firma Dr.Lange mit der Bezeichnung LCK 329 und eines zugehörigen Spektralphotometers Cadas 200 der Firma Dr. Lange bestimmt. In der nachfolgenden Tabelle sind die durch den funktionalen Schaumstoff adsorbierten Mengen an Cu(II)-Ionen dargestellt.

| | | | | | | | |
|---|---|---|---|---|---|---|---|
| Eingangs-Konzentration [Cu(II)] in der Lösung | ppm | 5 | 10 | 25 | 50 | 100 | 200 |
| Konzentration [Cu(II)] in der Lösung nach dem Schütteln | ppm | 1,3 | 1,4 | 1,6 | 2,3 | 3,5 | 11,9 |
| Adsorbierte Menge an Cu(II)/g Schaum | mg/g | 0,09 | 0,22 | 0,59 | 1,19 | 2,41 | 4,70 |

Wie der Tabelle zu entnehmen ist, ist der in Beispiel 22) hergestellte Schaumstoff in der Lage, einen signifikanten Anteil an Cu(II)-Ionen durch Komplexbildung mit den Aminogruppen des Polyethylenimins zu binden und dadurch zu adsorbieren.

### Beispiel 24)

Es wurde verfahren wie in 13) wobei die Poylol-Komponente zusätzlich 20,00 Gew.-Teile eines vernetzen, wasserunlöslichen Copolymeren aus Vinylimidazol und Vinylpyrrolidon mit der Bezeichnung Divergan^{®} HM (BASF Aktiengesellschaft) enthielt.

### Beispiel 25)

Aus dem in Beispiel 24) hergestellten Schaumstoff wurde eine dünne Matte mit den Maßen 40 x 20 x 1 cm ausgeschnitten und diese mit einer 15 %- igen wässrigen Lösung eines modifizierten Polyethylenimins mit einem Molekulargewicht von ca. 2.000.000 g/mol mit der Bezeichnung Lupasol^{®} SK getränkt. Anschließend wurde die Matte durch eine Foulard-Maschine gepresst. Der Überschuss an Polyethylenimin wurde hierdurch ausgepresst bis die Matte eine Gewichtszunahme von 151 % aufwies. Anschließend wurde die Matte bei 50 °C im Trockenschrank 24 Stunden lang einer Temperung entworfen, um das Polyethylenimin kovalent auf dem Schaumstoff anzubinden (Thermofixierung). Anschließend wurde die Matte 3 x mit Wasser gewaschen, um nicht gebundenes Polyethylenimin zu entfernen. Als letzter Schritt wurde die Matte bei 50 °C im Trockenschrank getrocknet. Der trockene Schaumstoff enthielt nach Rückwiegen 6,7 % Lupasol^{®} SK.

### Beispiel 26)

1 g des in Beispiel 25) hergestellten Schaumstoffes wurde in einem verschlossenen Chemikalienglas mit 30 ml einer wässrigen Lösung von Kupfer(II)-chlorid 20 h lang bei Raumtemperatur geschüttelt. Dabei hatte die Kupfer(II)-chloridlösung eine Konzentration an Kupfer(II)-Ionen von 1000 ppm. Nach dem Schütteln wurde die Lösung abfiltriert und die Konzentration an Kupfer(II)-Ionen in der Lösung mit Hilfe eines Küvetten-Schnelltests der Firma Dr.Lange mit der Bezeichnung LCK 329 und eines zugehörigen Spektralphotometers Cadas 200 der Firma Dr. Lange bestimmt. In der nachfolgenden Tabelle ist die durch den funktionalen Schaumstoff adsorbierte Menge an Cu(II)-Ionen dargestellt.

| | | |
|---|---|---|
| Eingangs-Konzentration [Cu(II)] in der Lösung | ppm | 1000 |
| Konzentration [Cu(II)] in der Lösung nach dem Schütteln | ppm | 226,0 |
| Adsorbierte Menge an Cu(II)/g Schaum | mg/g | 23,2 |

Wie der Tabelle zu entnehmen ist, ist der in Beispiel 22) hergestellte Schaumstoff in der Lage, einen signifikanten Anteil an Cu(II)-Ionen durch Komplexbildung mit den Aminogruppen des Polyethylenimins und der Imidazol-bzw. Pyrrolidongruppe zu binden und dadurch zu adsorbieren.

### Beispiel 27)

1 g des in Beispiel 25) hergestellten Schaumstoffes wurde in einem verschlossenen Chemikalienglas mit 30 ml einer wässrigen Lösung von Kupfer(II)-chlorid 20 h lang bei Raumtemperatur geschüttelt. Dabei hatte die Kupfer(II)-chloridlösung eine Konzentration an Kupfer(II)-Ionen von 400 ppm. Nach dem Schütteln wurde die Lösung abfiltriert und die Konzentration an Kupfer(II)-Ionen in der Lösung mit Hilfe eines Küvetten-Schnelltests der Firma Dr.Lange mit der Bezeichnung LCK 329 und eines zugehörigen Spektralphotometers Cadas 200 der Firma Dr. Lange bestimmt. Der Schaumstoff mit den adsorbierten Kupfer(11)-Ionen wurde anschließend mit 30 ml einer 0,5 N Salzsäure in Kontakt gebracht, um die auf dem Schaumstoff adsorbierten Cu(II)-Ionen wieder abzulösen. Die Salzsäure führt dabei zu einer Auflösung des Komplexes aus Polyethylenimin und Cu(II)-Ionen, indem die Aminogruppen des Polyethylenimins protoniert werden. Um die Amingruppen wieder zu deprotonieren und wieder freie Kapazität für die Komplexbildung mit den Cu(II)-Ionen zu schaffen, wurde der Schaumstoff anschließend mit 30 ml 0,5 N Natronlauge versetzt. Danach wurde der Schaumstoff mit Wasser gewaschen und wieder wie oben beschrieben mit Kupfer(II)-Chlorid-Lösung geschüttelt und die Konzentration an Cu(II)-Ionen in der Lösung ermittelt. Dieser Vorgang wurde noch ein zweites und drittes mal wiederholt. In der folgenden Tabelle sind die nach den einzelnen Regenertionszyklen erreichten Adsorptionsmengen dargestellt.

| | | | | | |
|---|---|---|---|---|---|
| Beladungszyklus/Regenarationszyklus | ppm | 1/0 | 2/1 | 3/2 | 4/3 |
| Konzentration [Cu(II)] in der Lösung nach dem Schütteln | ppm | 29,3 | 16,0 | 5,8 | 0,3 |
| Adsorbierte Menge an Cu(II)/g Schaum | mg/g | 11,1 | 11,5 | 11,8 | 12,0 |

Wie die Tabelle zeigt, lassen sich die beladenen Schaumstoffe mehrfach regenerieren und danach wieder mit Cu(II)-Ionen beladen, wobei die Aufnahmekapazität nach mehreren Regenerierungsschritten sogar höher wird, da durch die Behandlung mit Natronlauge mehr und mehr Aminogruppen im Polyethyleniminmolekül deprotoniert werden. Die dadurch erzeugten freien Elektronenpaare führen zu einer erhöhten Komplexbildung der Cu(II)-Ionen.

## Patentansprüche

1. Polyurethanschaumstoffe, **dadurch gekennzeichnet, dass** sie adsorbierende Mittel (i) ausgewählt aus der Gruppe, enthaltend Vinylimidazol-Homopolymere, Vinylpyrrolidon-Homopolymere, Polyvinylpyrrolidon, modifiziertes Polyvinylpyrrolidin, Polyvinylimidazol, modifiziertes Polyvinylimidazol, Copolymere aus Vinylpyrrolidon mit Vinylimidazol, Copolymere aus Vinylpyrrolidon mit Vinylacetat, Copolymere aus Vinylpyrrolidon mit Vinylformamid, mit olefinisch ungesättigten Carbonsäuren modifizierte Polyetheylenimine, mit Alkylenoxiden umgesetzte Polyetheylenimine und mit Amidgruppen modifizierte Polyethylenimine enthalten und dass die Matrix der Polyurethanschaumstoffe Acrylatgruppen enthält.

2. Polyurethanschaumstoffe nach Anspruch 1, **dadurch gekennzeichnet, dass** die adsorbierenden Mittel (i) in einer Menge von 0,1 bis 100 Gew.-%, bezogen auf das Gewicht des Schaumstoffs, enthalten sind.

3. Verfahren zur Herstellung von Polyurethan-Schaumstoffen nach Anspruch 1, durch Umsetzung von Polyisocyanaten mit Verbindungen mit mindestens zwei mit Isocyanatgruppen reaktiven Wasserstoffatomen, **dadurch gekennzeichnet, dass** dem Schaumstoff während und/oder nach der Herstellung ein adsorbierendes Mittel (i) zugesetzt wird.

4. Verfahren nach Anspruch 3, **dadurch gekennzeichnet, dass** die adsorbierenden Mittel (i) ausgewählt sind aus der Gruppe, enthaltend Vinylimidazol-Homopolymere, Vinylpyrrolidon-Homopolymere, Polyvinylpyrrolidon, modifiziertes Polyvinylpyrrolidin, Polyvinylimidazol, modifiziertes Polyvinylimidazol, Copolymere aus Vinylpyrrolidon mit Vinylimidazol, Copolymere aus Vinylpyrrolidon mit Vinylacetat, Copolymere aus Vinylpyrrolidon mit Vinylformamid, mit olefinisch ungesättigten Carbonsäuren modifizierte Polyetheylenimine, mit Alkylenoxiden umgesetzte Polyetheylenimine und mit Amidgruppen modifizierte Polyetheylenimine.

5. Verfahren nach Anspruch 3 **dadurch gekennzeichnet, dass** die adsorbierenden Mittel (i) mindestens einer Aufbaukomponente des Polyurethan-Schaums zugesetzt werden.

6. Verfahren nach Anspruch 3, **dadurch gekennzeichnet, dass** Vinylpyrrolidon-Homopolymere und Copolymere aus Vinylpyrrolidon mit Vinylimidazol mindestens einer Aufbaukomponente des Polyurethan-Schaums zugesetzt werden.

7. Verfahren nach Anspruch 3, **dadurch gekennzeichnet, dass** der Polyurethanschaumstoff nach seiner Herstellung mit dem adsorbierenden Mittel (i) getränkt wird.

8. Verfahren nach Anspruch 3, **dadurch gekennzeichnet, dass** der Polyurethanschaumstoff nach seiner Herstellung mit dem flüssigen adsorbierenden Mittel (i) getränkt wird

9. Verfahren nach Anspruch 3, **dadurch gekennzeichnet, dass** der Polyurethanschaumstoff nach seiner Herstellung mit einer Lösung des festen oder flüssigen adsorbierenden Mittels (i) in einem geeigneten Lösemittel getränkt wird

10. Verwendung von Polyurethanschaumstoffen nach Anspruch 1 zur Absorption von organischen Verbindungen aus Flüssigkeiten und Gasen.

11. Verwendung von Polyurethanschaumstoffen nach Anspruch 1 zur Absorption von Farbstoffen aus Flüssigkeiten.

12. Verwendung von Polyurethanschaumstoffen nach Anspruch 1 zur Absorption von Schwermetallionen aus Flüssigkeiten und Gasen.

## Claims

1. A polyurethane foam which comprises adsorbent agents (i) selected from the group consisting of vinylimidazole homopolymers, vinylpyrrolidone homopolymers, polyvinylpyrrolidone, modified polyvinylpyrrolidone, polyvinylimidazole, modified polyvinylimidazole, copolymers of vinylpyrrolidone with vinylimidazole, copolymers of vinylpyrrolidone with vinyl acetate, copolymers of vinylpyrrolidone with vinylformamide, polyethylenimines modified with olefinically unsaturated carboxylic acids, polyethylenimines reacted with alkylene oxides and polyethylenimines modified with amide groups, wherein the matrix of the polyurethane foam comprises acrylate groups.

2. The polyurethane foam according to claim 1, wherein the adsorbent agents (i) are comprised in an amount of from 0.1 to 100% by weight, based on the weight of the foam.

3. A process for producing polyurethane foams according to claim 1 by reacting polyisocyanates with compounds having at least two hydrogen atoms which are reactive toward isocyanate groups, wherein an adsorbent agent (i) is added to the foam during and/or after its production.

4. The process according to claim 3, wherein the adsorbent agents (i) are selected from the group consisting of vinylimidazole homopolymers, vinylpyrrolidone homopolymers, polyvinylpyrrolidone, modified polyvinylpyrrolidine, polyvinylimidazole, modified polyvinylimidazole, copolymers of vinylpyrrolidone with vinylimidazole, copolymers of vinylpyrrolidone with vinyl acetate, copolymers of vinylpyrrolidone with vinylformamide, polyethylenimines modified with olefinically unsaturated carboxylic acids, polyethylenimines reacted with alkylene oxides and polyethylenimines modified with amide groups.

5. The process according to claim 3, wherein the adsorbent agents (i) are added to at least one formative component of the polyurethane foam.

6. The process according to claim 3, wherein vinylpyrrolidone homopolymers and copolymers of vinylpyrrolidone with vinylimidazole are added to at least one formative component of the polyurethane foam.

7. The process according to claim 3, wherein the polyurethane foam is impregnated with the adsorbent agent (i) after it has been produced.

8. The process according to claim 3, wherein the polyurethane foam is impregnated with the liquid adsorbent agent (i) after it has been produced.

9. The process according to claim 3, wherein the polyurethane foam is impregnated with a solution of the solid or liquid adsorbent agent (i) in a suitable solvent after it has been produced.

10. The use of polyurethane foams according to claim 1 for the absorption of organic compounds from liquids and gases.

11. The use of polyurethane foams according to claim 1 for the absorption of dyes from liquids.

12. The use of polyurethane foams according to claim 1 for the absorption of heavy metal ions from liquids and gases.

## Revendications

1. Mousses de polyuréthane, **caractérisées en ce qu'**elles contiennent des agents adsorbants (i) choisis dans le groupe contenant des homopolymères de vinylimidazole, des homopolymères de vinylpyrrolidone, de la polyvinylpyrrolidone, une polyvinylpyrrolidone modifiée, du polyvinylimidazole, un polyvinylimidazole modifié, des copolymères de vinylpyrrolidone avec le vinylimidazole, des copolymères de vinylpyrrolidone avec l'acétate de vinyle, des copolymères de vinylpyrrolidone avec le vinylformamide, des polyéthylène-imines modifiées avec des acides carboxyliques à insaturation oléfinique, des polyéthylène-imines ayant réagi avec des oxydes d'alkylène, et des polyéthylène-imines modifiées avec des groupes amido et **en ce que** la matrice des mousses de polyuréthane contient des groupes acrylate.

2. Mousses de polyuréthane selon la revendication 1, **caractérisées en ce que** les agents adsorbants (i) sont contenus en une quantité de 0,1 à 100 % en poids, par rapport au poids de la mousse.

3. Procédé pour la production de mousses de polyuréthane selon la revendication 1, par mise en réaction de polyisocyanates avec des composés comportant au moins deux atomes d'hydrogène réactifs avec des groupes isocyanate, **caractérisé en ce que** pendant et/ou après la production on ajoute à la mousse un agent adsorbant(i).

4. Procédé selon la revendication 3, **caractérisé en ce que** l'agent adsorbant (i) est choisi dans le groupe contenant des homopolymères de vinylimidazole, des homopolymères de vinylpyrrolidone, de la polyvinylpyrrolidone, une polyvinylpyrrolidone modifiée, du polyvinylimidazole, un polyvinylimidazole modifié, des copolymères de vinylpyrrolidone avec le vinylimidazole, des copolymères de vinylpyrrolidone avec l'acétate de vinyle, des copolymères de vinylpyrrolidone avec le vinylformamide, des polyéthylène-imines modifiées avec des acides carboxyliques à insaturation oléfinique, des polyéthylène-imines ayant réagi avec des oxydes d'alkylène, et des polyéthylène-imines modifiées avec des groupes amido.

5. Procédé selon la revendication 3, **caractérisé en ce qu'**on ajoute les agents adsorbants (i) à au moins un composant structural de la mousse de polyuréthane.

6. Procédé selon la revendication 3, **caractérisé en ce qu'**on ajoute à au moins un composant structural de la mousse de polyuréthane des homopolymères de vinylpyrrolidone et des copolymères de vinylpyrrolidone avec le vinylimidazole.

7. Procédé selon la revendication 3, **caractérisé en ce qu'**on imprègne la mousse de polyuréthane, après sa production, avec l'agent adsorbant (i).

8. Procédé selon la revendication 3, **caractérisé en ce qu'**on imprègne la mousse de polyuréthane, après sa production, avec l'agent adsorbant (i) liquide.

9. Procédé selon la revendication 3, **caractérisé en ce qu'**on imprègne la mousse de polyuréthane, après sa production, avec une solution de l'agent adsorbant (i) liquide ou solide, dans un solvant approprié.

10. Utilisation de mousses de polyuréthane selon la revendication 1, pour l'absorption de composés organiques à partir de liquides et de gaz.

11. Utilisation de mousses de polyuréthane selon la revendication 1, pour l'absorption de solides à partir de liquides.

12. Utilisation de mousses de polyuréthane selon la revendication 1, pour l'absorption d'ions de métaux lourds à partir de liquides et de gaz.
